# FASCICULE DE BREVET EUROPEEN

(11) **EP 2 911 923 B1**
(45) Date de publication et mention de la délivrance du brevet: **15.07.2020**
(21) Numéro de dépôt: 13789879.7
(22) Date de dépôt: 23.10.2013
(51) Int. Cl.: B60S 1/52, B60S 1/60, B62D 25/24

(54) **ENSEMBLE DE FIXATION D'UN DISPOSITIF LAVE PROJECTEUR ESCAMOTABLE**
ANORDNUNG ZUR BEFESTIGUNG EINER EINZIEHBAREN SCHEINWERFERREINIGUNGSVORRICHTUNG
ASSEMBLY FOR SECURING A RETRACTABLE HEADLAMP WASHER DEVICE

(30) Priorité: 26.10.2012 FR 1260261
(43) Date de publication de la demande: 02.09.2015
(73) Titulaire: Compagnie Plastic Omnium, 69007 Lyon (FR)
(72) Inventeur: JEANTON, Raphaël, F-01640 Saint-Jean-Le-Vieux (FR); RIVOIRE, Sébastien, 69140 Rillieux-la-Pape (FR)
(74) Mandataire: Remy, Vincent Noel Paul
(86) Numéro de dépôt international: PCT/FR2013/052543
(87) Numéro de publication internationale: WO 2014/064388

(56) Documents cités:
- EP-A2- 1 911 642
- DE-A1- 4 121 316
- DE-C1- 3 914 768
- FR-A1- 2 681 033
- JP-A- 2001 301 583

## Description

La présente invention concerne un ensemble de fixation d'un lave projecteur escamotable sur une pièce de carrosserie de véhicule automobile.

Le lave projecteur est un organe monté à proximité des optiques de véhicule pour asperger leur vitrage avec de l'eau ou un mélange nettoyant.

Il fait partie d'un sous ensemble appelé « kit lave projecteur», comprenant le lave projecteur et un vérin couplé à un ressort de rappel permettant le déplacement du lave projecteur. Un support de fixation est apte à maintenir le kit lave projecteur sur la carrosserie du véhicule tandis qu'un cache, solidaire ou non du vérin rétractable, permet de cacher le lave projecteur lorsque celui-ci est dans une position rentrée à l'intérieur de la carrosserie du véhicule. Dans un but de clarté, on appellera lave projecteur l'ensemble « kit lave projecteur » en considérant le lave projecteur, le ressort et le vérin comme un tout.

On connaît du document EP 1 125 808 A2, un ensemble de fixation de lave projecteur qui comporte un support de lave projecteur utilisant notamment des vis. Les vis sont des moyens de fixation rapportés qui sont les plus couramment utilisés, mais on rencontre également d'autres moyens de fixation rapportés comme par exemple des clips métalliques. De manière générale, les moyens de fixation rapportés permettent de plaquer avec force le support de lave projecteur contre la carrosserie et suppriment le jeu tout en sécurisant la fixation. Par ailleurs, on rencontre aussi des moyens de fixation permanents tels que des soudures ou des points de colle.

Ainsi, les solutions existantes proposent des ensembles de fixation de lave projecteur qui impliquent l'utilisation d'éléments de fixation rapportés ou permanents afin de remplir plusieurs fonctions, à savoir principalement de permettre de résister aux vibrations en roulage mais aussi de subir les cycles répétés de déplacement du vérin.

Par ailleurs, ces éléments de fixation rapportés ou permanents ont aussi pour fonction de rattraper le jeu entre la carrosserie et le support de fixation, en assurant le maintien en porte-à-faux du lave projecteur de manière fiable et durable, de sorte qu'après plusieurs années de vie du véhicule, le poids et les vibrations du lave projecteur ne favorisent pas l'apparition d'un jeu entre la carrosserie et le support de fixation.

Lors de l'assemblage sur le véhicule, de telles solutions de support de fixation nécessitent un approvisionnement en éléments de fixation rapportés, exigent une étape supplémentaire de mise en place de ces moyens de fixation rapportés et impliquent l'utilisation d'équipements de production supplémentaires comme une visseuse, un poste de soudure ou un dispositif de collage par exemple. Par ailleurs, lorsque les moyens de fixation sont des vis ou des clips, la recyclabilité du pare-choc complet est diminuée du fait de la difficulté à séparer ces moyens de fixation qui sont de petits composants en métal. JP A 2001301583 décrit un lave projecteur comprenant un support et un élément de positionnement qui comprend des pattes d'engagement coopérant avec les ouvertures portées par le support afin de rendre le support et l'élément de positionnement solidaires.

Un but de la présente invention est de proposer une solution dans laquelle dans lequel le support de lave projecteur est maintenu contre la carrosserie, sans présenter les inconvénients précités.

A cet effet, l'invention a pour objet un ensemble de fixation conforme à la revendication 1.

Ainsi, un tel ensemble de fixation permet de maintenir de manière durable un support de lave projecteur en le plaquant fortement contre la carrosserie du véhicule alors que le lave projecteur se trouve essentiellement en porte-à-faux par rapport à ladite carrosserie.

Par ailleurs, un tel ensemble de fixation permet de supprimer l'approvisionnement en moyens de fixation rapportés et de supprimer des étapes de mise en place de ces moyens de fixation ainsi que d'éventuelles étapes de soudage ou de collage. Ceci a pour effet de réduire les investissements liés aux équipements de production associés ainsi que la place occupée en bord de chaîne par ces équipements.

On entend par durable, qu'il n'y a pas, dans les situations habituelles de vie du système et pendant une période approximative de 10 ans ou bien après 100000 km d'utilisation, d'une part de dégradation d'aspect visuel, en particulier au niveau des jeux et affleurements de la trappe par rapport à la peau et des jeux entre les éléments composants le lave projecteur et d'autre part qu'il n'y pas non plus de dégradation fonctionnelle comme par exemple un coincement du vérin, ou l'apparition de phénomènes vibratoires.

L'ensemble de fixation tel que défini ci-dessus peut en outre comporter l'une ou plusieurs des caractéristiques suivantes, prises seules ou en combinaison.
- Des appuis entre le support et la pièce de carrosserie sont constitués par une face de la pièce de carrosserie et les seuls appuis assurant le maintien en position du support sont les appuis entre le support et la pièce de carrosserie.
- Le support comprend une zone d'appui proximale supérieure et une zone d'appui proximale inférieure, la zone d'appui proximale supérieure et la zone d'appui proximale inférieure étant en appui contre le bord de l'ouverture de la pièce de carrosserie.
- L'ensemble de fixation comprend une zone d'appui distale inférieure qui est en appui contre la pièce de carrosserie à une distance permettant un maintien durable du plaquage de la zone d'appui proximale supérieure contre la pièce de carrosserie.
- La zone d'appui proximale supérieure a un rebord adapté pour être en appui sur la pièce de carrosserie, le rebord ayant une largeur comprise inférieure ou égale à 12 mm.
- La distance entre la zone d'appui proximale inférieure et la zone d'appui distale inférieure est inférieure ou égale à 40mm, et de préférence comprise entre 10 et 30 mm.
- Les éléments de liaison sont des ergots d'encliquetage.
- Le positionnement horizontal et vertical de l'embase par rapport au support est assuré par des godrons venus de moulage avec l'embase ou avec le support.
- Le support se trouve essentiellement en porte-à-faux par rapport à la surface d'appui de la carrosserie contre laquelle la zone d'appui proximale supérieure se trouve plaquée.
- L'ensemble de fixation comporte une jambe d'appui adaptée pour soutenir le support au moins en partie. Ainsi, les efforts et vibrations auxquels est soumis le lave projecteur sont transmis à la carrosserie du véhicule d'une part par les éléments de liaison et d'autre part par la jambe d'appui.

L'invention sera mieux comprise à la lecture de la description qui va suivre, donnée uniquement à titre d'exemple et faite en se référant aux dessins dans lesquels :
- la figure 1 est une vue en perspective d'un ensemble de fixation d'un dispositif lave projecteur escamotable comportant une embase et un mode de réalisation,
- la figure 2 est une vue en perspective en coupe de l'ensemble de fixation d'un dispositif lave projecteur escamotable de la figure 1 sans l'embase,
- la figure 3 est une vue en perspective de l'embase de la figure 1 sans le support,
- la figure 4 est une vue en perspective en élévation de l'ensemble de fixation de la figure 1.

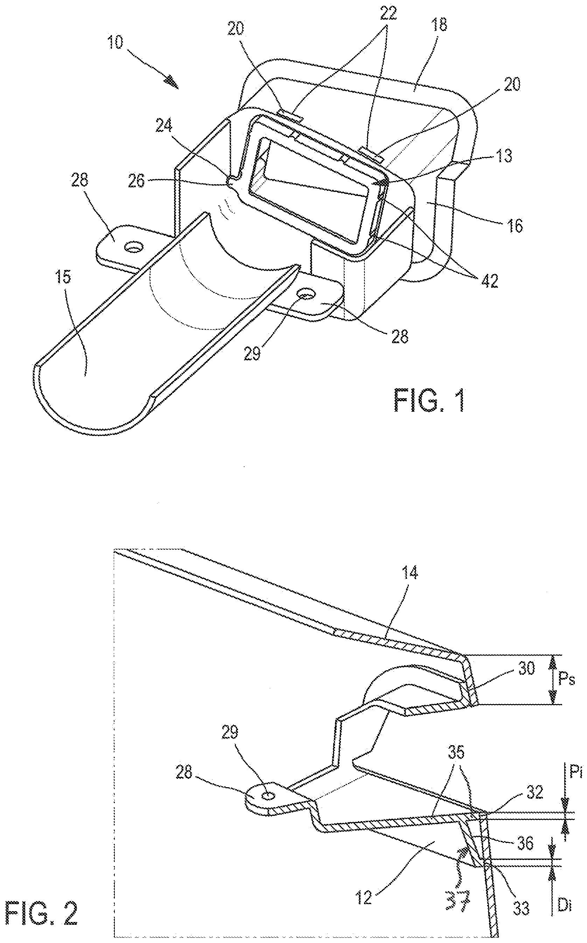

En référence à la figure 1, on voit un ensemble de fixation 10 d'un dispositif lave projecteur escamotable qui comporte un support 12 destiné à recevoir le lave projecteur (non représenté) et une embase 13 permettant de coopérer avec le support 12 pour le maintien du lave projecteur en porte-à-faux sur la carrosserie d'un véhicule 14.

Le support 10 présente une partie sensiblement semi-tubulaire 15 apte à recevoir le vérin du lave projecteur dont le corps a le plus souvent une forme cylindrique. Lorsque l'ensemble de fixation 10 est monté sur une pièce de carrosserie 14 de véhicule, le support 12 est logé à l'intérieur de la pièce de carrosserie 14 du véhicule et supporte le lave projecteur. La partie semi-tubulaire 15 est prolongée par une portion en volume sensiblement parallélépipédique 16 constituant le logement, en position escamotée, de la tête du vérin comportant la ou les buses et qui se situe à proximité de la carrosserie 11 lorsque le support 12 de lave projecteur est monté sur le véhicule. On voit que cette portion parallélépipédique comporte des lumières 20 aptes à recevoir des éléments de liaison 22 de l'embase 13. Dans le cas présent, ces éléments de liaison sont des ergots d'encliquetage venus de matière avec l'embase. Cette dernière comporte également un rebord plat 18 présent en périphérie et dont une partie est apte à être plaqué contre une zone d'appui extérieure à la carrosserie. Ainsi le support se trouve entièrement en porte-à-faux par rapport à la surface d'appui interne de la carrosserie et le rebord plat 18 de la portion parallélépipédique 16 est plaqué contre un bord interne d'une ouverture de la pièce de carrosserie 14.

En fait, des appuis entre le support 12 et la pièce de carrosserie 14 sont constitués par une face de la pièce de carrosserie 14 et les seuls appuis assurant le maintien en position du support 12 sont des appuis entre le support 12 et la pièce de carrosserie 14. On observe également que le support 12 comporte une gorge 24 apte à recevoir un godron de détrompage 26 de l'embase 13.

On trouve également entre la section semi-tubulaire 15 et la partie parallélépipédique deux portions d'attache 28 sensiblement horizontales et plates comportant des orifices 29 aptes à recevoir des vis de fixation pour le maintien du lave projecteur sur le support 12 de l'ensemble de fixation 10.

En référence à la figure 2, on voit que le rebord plat 18 du support 12 comprend une zone d'appui proximale supérieure 30, une zone d'appui proximale inférieure 32 et une zone d'appui distale inférieure 33 qui sont en appui contre la paroi interne de l'ouverture de la carrosserie. Il serait par ailleurs envisageable d'avoir une zone d'appui qui ne comporte pas de rebord plat 18, la zone d'appui proximale supérieure 30 étant dans ce cas formée par l'épaisseur de paroi du support 12.

La figure 2 montre que la zone d'appui proximale supérieure 30 est en appui sur une partie supérieure du bord de l'ouverture, que la zone d'appui proximale inférieure 32 est en appui sur une partie inférieure du bord de l'ouverture et que la zone d'appui distale inférieure 33 est en appui contre la pièce de carrosserie à une distance permettant un maintien durable du placage de la zone d'appui proximale supérieur 30 contre la pièce de carrosserie. Pour obtenir ce maintien, la zone d'appui proximale inférieure 32 est reliée à la zone d'appui distale inférieure 33 par une nervure sensiblement horizontale 35 et une nervure inclinée 36.

En fait, la zone distale inférieure 33 est située dans une position plus basse que la zone proximale inférieure 32 afin de constituer, grâce aux nervures 35, 36, un jambage d'appui ou jambe d'appui 37 qui agit contre l'effet de porte-à-faux en reprenant les efforts et en améliorant la stabilité. Ces deux nervures 35, 36 permettent, grâce à un dimensionnement avec des tolérances et des jeux serrés entre les zones en appui sur la pièce de carrosserie, de produire un effet de bras de levier entre la zone d'appui distale inférieure 33 et la zone d'appui proximale inférieure 32. Ainsi, la jambe d'appui 37 formée par les nervures 35, 36 est adaptée pour soutenir le support au moins en partie. En fait, la jambe 37 transmet vers la carrosserie une partie des efforts engendrés par le porte-à-faux du support et transmet également vers la carrosserie une partie des vibrations du support lors du roulage du véhicule.

Dans l'exemple, la zone d'appui proximale supérieure 30 a une largeur Pₛ de 8 mm tandis que la zone d'appui proximale inférieure Pᵢ est de 1.5 mm et la zone d'appui distale inférieure Dᵢ de 1.5 mm. La distance entre la zone d'appui proximale inférieure Pᵢ et la zone d'appui distale inférieure Dᵢ est de 15 mm. Dans l'exemple, la surface de contact de la zone d'appui proximale supérieure est au moins cinq fois égale à la surface de contact de la zone d'appui proximale inférieure et au moins cinq fois égale à la surface de contact de la la zone d'appui distale inférieure.

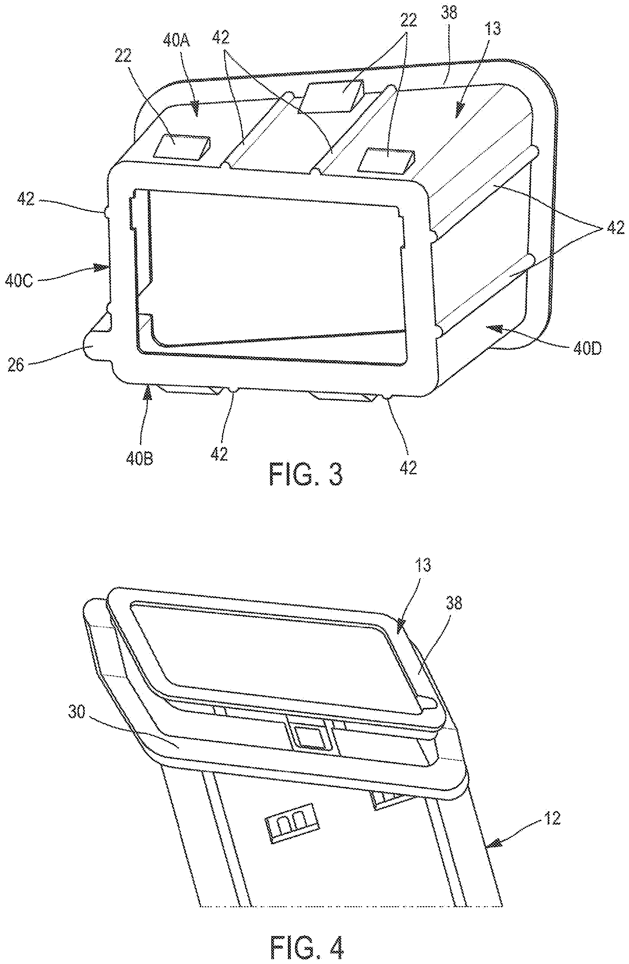

En référence à la figure 3, on voit l'embase 13 qui a une forme parallélépipédique adaptée pour venir se loger dans l'ouverture de la carrosserie du véhicule et à l'intérieur du support 12 avec laquelle elle coopère pour former l'ensemble de fixation. L'embase 13 comporte un rebord plat 38 périphérique qui lui permet d'être plaquée contre la peau de la carrosserie 14. Des moyens de liaison 22 sont venus de matière avec l'embase 13 et agencés sur une face supérieure 40A et sur une face inférieure 40B de l'embase. Ces moyens sont aptes à coopérer avec des moyens du support 12 qui sont les lumières 20 dans cet exemple. Ainsi, l'embase 13 comprend quatre faces externes : une face supérieure 40A, une face inférieure 40B et deux faces latérales 40C, 40D, chacune des faces comportant des godrons de centrage 42 de faible épaisseur aptes à faciliter le positionnement horizontal et vertical ainsi que le centrage de l'embase à l'intérieur du support et de la pièce de carrosserie.

Sur la face latérale 40C, on voit un godron de détrompage 26, qui oblige a positionner l'embase 13 de manière correcte par rapport à la carrosserie et au support lors du montage. En effet, celui-ci coopère avec la gorge 24 du support et avec une échancrure 44 de la carrosserie.

En référence à la figure 4, on voit le support 12 et l'embase 13 qui sont montés sur la carrosserie du véhicule. Les éléments de liaison 22 de l'embase 13 coopèrent avec les lumières du support, et le rebord plat 38 de l'embase est en appui sur la carrosserie. Ainsi, l'embase 13 et le support 12 sont fixés à la carrosserie 14, la carrosserie étant prise en sandwich entre le rebord plat 38 de l'embase 13 et le support 12. Les éléments de liaison 22 et les lumières sont donc les uniques moyens de fixation de l'embase et du support sur la carrosserie du véhicule. Ils sont conformés pour assurer le maintien durable de ladite prise en sandwich, mais aussi pour assurer un positionnement prédéterminé durable du support 12 et de l'embase 13 par rapport à la carrosserie du véhicule 14.

Bien entendu, on pourra apporter à l'invention de nombreuses modifications sans sortir du cadre de celle-ci. Notamment, la distance entre les zone d'appui proximale inférieure Pᵢ et la zone d'appui distale inférieure Dᵢ pourrait être comprise entre 0 et 40, et de préférence entre 30 et 40 mm. Les rebords d'appui situés en périphérie du support 12 ou de l'embase 13 peuvent être continus ou discontinus. Il serait également possible qu'une des zones 30, 32, comporte une partie qui serait en appui sur la paroi externe de la carrosserie. Pour les éléments de liaisons 22, ceux-ci pourraient être venus de matière avec le support et les lumières correspondantes se trouvées sur l'embase. La jambe d'appui 36 pourrait être renforcée par un réseau de nervures sensiblement verticales, la reliant à la portion parallélépipédique 16 et / ou à la nervure 35. Enfin, le nombre ou la position des godrons de centrage 42 pourrait être différent. Par exemple on pourrait avoir une face de l'embase qui comporte trois godrons tandis que la face opposée n'en présente pas.

## Revendications

1. Ensemble de fixation (10), sur une pièce de carrosserie (14) de véhicule automobile, d'un lave projecteur escamotable par une ouverture réalisée dans cette pièce de carrosserie (14), ledit ensemble (10) comportant un support (12) destiné à recevoir ledit lave projecteur et une embase (13), le support (12) et l'embase (13) étant deux pièces distinctes, l'un de l'ensemble constitué par l'embase (13) et le support (12) comprenant des éléments de liaison (22) venus de matière, et aptes à coopérer avec des lumières (20) de l'autre de l'ensemble constitué par l'embase (13) et le support (12), ces éléments de liaison (22) et les lumières (20) étant dimensionnés de manière à permettre, à eux seuls, une prise en sandwich de la pièce de carrosserie (14) entre l'embase (13) et le support (12) et un maintien durable de cette prise en sandwich, **caractérisé en ce que** les éléments de liaison (22) et les lumières (20) sont les uniques moyens de fixation de l'embase (13) et du support (12) sur la carrosserie du véhicule.

2. Ensemble de fixation (10) selon la revendication précédente, dans lequel des appuis entre le support (12) et la pièce de carrosserie (14) sont constitués par une face de la pièce de carrosserie (14) et dans lequel les seuls appuis assurant le maintien en position du support (12) sont les appuis entre le support (12) et la pièce de carrosserie (14).

3. Ensemble de fixation (10) selon la revendication 1 ou 2, le support (12) comprend une zone d'appui proximale supérieure (30) et une zone d'appui proximale inférieure (32), la zone d'appui proximale supérieure (30) et la zone d'appui proximale inférieure (32) étant en appui contre le bord de l'ouverture de la pièce de carrosserie (14).

4. Ensemble de fixation (10) selon l'une quelconque des revendications précédentes comprenant une zone d'appui distale inférieure (33) qui est en appui contre la pièce de carrosserie (14) à une distance permettant un maintien durable du plaquage de la zone d'appui proximale supérieure (30) contre la pièce de carrosserie (14).

5. Ensemble de fixation (10) selon l'une quelconque des revendications précédentes dans lequel la zone d'appui proximale supérieure a un rebord (18) adapté pour être en appui sur la pièce de carrosserie, le rebord (18) ayant une largeur inférieure ou égale à 12 mm.

6. Ensemble selon l'une quelconque des revendications 1 à 5, dans lequel la distance entre la zone d'appui proximale inférieure (32) et la zone d'appui distale inférieure (33) est inférieure ou égale à 40mm, et de préférence comprise entre 10 et 30 mm.

7. Ensemble selon l'une quelconque des revendications 1 à 6, dans lequel les éléments de liaison sont des ergots d'encliquetage.

8. Ensemble selon la revendication 1 à 7, dans lequel le positionnement horizontal et vertical de l'embase par rapport au support est assuré par des godrons venus de moulage avec l'embase ou avec le support.

9. Pièce de carrosserie munie d'un ensemble selon l'une quelconque des revendications 1 à 8, dans laquelle le support se trouve essentiellement en porte-à -faux par rapport à la surface d'appui de la carrosserie contre laquelle la zone d'appui proximale supérieure se trouve plaquée.

10. Ensemble selon l'une des revendications 1 à 8, comportant une jambe d'appui (37) adaptée pour soutenir le support (12) au moins en partie.

## Patentansprüche

1. Befestigungsanordnung (10) einer Scheinwerferreinigungsanlage an einem Karosserieteil (14) eines Kraftfahrzeugs, die durch eine in diesem Karosserieteil (14) hergestellte Öffnung einziehbar ist, wobei die Anordnung (10) einen Träger (12) aufweist, der eingerichtet ist, die Scheinwerferreinigungsanlage aufzunehmen, und einen Sockel (13) aufweist, wobei der Träger (12) und der Sockel (13) zwei verschiedene Teile sind, wobei eines der Teile der Anordnung, die aus dem Sockel (13) und dem Träger (12) besteht, integrale Verbindungselemente (22) aufweist, und eingerichtet ist, mit Schlitzen (20) des anderen Teils der Anordnung, die aus dem Sockel (13) und dem Träger (12) besteht, zusammenzuwirken, wobei diese Verbindungselemente (22) und die Schlitze (20) so dimensioniert sind, dass sie für sich genommen eine Sandwich-Anordnung des Karosserieteils (14) zwischen dem Sockel (13) und dem Träger (12) und einen dauerhaften Halt diese Sandwich-Anordnung ermöglichen,
**dadurch gekennzeichnet, dass** die Verbindungselemente (22) und die Schlitze (20) die einzigen Mittel zur Befestigung des Sockels (13) und des Trägers (12) an der Fahrzeugkarosserie sind.

2. Befestigungsanordnung (10) nach dem vorhergehenden Anspruch, bei der Stützen zwischen dem Träger (12) und dem Karosserieteil (14) durch eine Seite des Karosserieteils (14) gebildet werden und bei der die einzigen Stützen, die die Aufrechterhaltung der Position des Trägers (12) gewährleisten, die Stützen zwischen dem Träger (12) und dem Karosserieteil (14) sind.

3. Befestigungsanordnung (10) nach Anspruch 1 oder 2, wobei der Träger (12) einen oberen proximalen Stützbereich (30) und einen unteren proximalen Stützbereich (32) aufweist, wobei der obere proximale Stützbereich (30) und der untere proximale Stützbereich (32) gegen den Rand der Öffnung des Karosserieteils (14) anliegen.

4. Befestigungsanordnung (10) nach einem der vorhergehenden Ansprüche, aufweisend einen unteren distalen Stützbereich (33), der in einem Abstand gegen das Karosserieteil (14) anliegt, der es ermöglicht, den oberen proximalen Stützbereich (30) dauerhaft gegen das Karosserieteil (14) zu halten.

5. Befestigungsanordnung (10) gemäß einem der vorhergehenden Ansprüche, bei der der obere proximale Stützbereich einen Flansch (18) aufweist, der so ausgelegt ist, dass er an dem Karosserieteil anliegt ist, wobei der Flansch (18) eine Breite von 12 mm oder weniger aufweist.

6. Anordnung nach einem der Ansprüche 1 bis 5, bei der der Abstand zwischen dem unteren proximalen Stützbereich (32) und dem unteren distalen Stützbereich (33) kleiner oder gleich 40 mm, vorzugsweise zwischen 10 und 30 mm, ist.

7. Anordnung nach einem der Ansprüche 1 bis 6, wobei die Verbindungselemente Rastnasen sind.

8. Anordnung nach Anspruch 1 bis 7, wobei die horizontale und vertikale Positionierung des Sockels relativ zum Träger durch Gadroons bereitgestellt wird, die mit dem Sockel oder mit dem Träger geformt sind.

9. Karosserieteil, das mit einer Anordnung nach einem der Ansprüche 1 bis 8 versehen ist, wobei der Träger im Wesentlichen von der Auflagefläche der Karosserie, gegen die der obere proximale Auflagebereich gedrückt wird, auskragend gelagert ist.

10. Anordnung nach einem der Ansprüche 1 bis 8, umfassend ein Stützbein (37), das dazu eingerichtet ist, die Stütze (12) zumindest teilweise zu stützen.

## Claims

1. Assembly (10) for securing to a body part (14) of a motor vehicle a headlamp washer that is retractable through an opening made in this body part (14), said assembly (10) having a support (12) intended to receive said headlamp washer and a base (13), the support (12) and the base (13) being two separate parts, one of the assembly composed of the base (13) and the support (12) comprising integrally produced connecting elements (22) and able to cooperate with apertures (20) on the other of the assembly composed of the base (13) and the support (12), these connecting elements (22) and the apertures (20) being dimensioned such that they, alone, allow the body part (14) to be sandwiched between the base (13) and the support (12) and allow this sandwiching to be maintained durably, **characterised in that** the connecting elements (22) and the apertures (20) are the only means of securing the base (13) and the support (12) to the vehicle body.

2. Securing assembly (10) according to the preceding claim, wherein bearing surfaces between the support (12) and the body part (14) are formed by one side of the body part (14) and wherein the only bearing surfaces holding the support (12) in position are the bearing surfaces between the support (12) and the body part (14).

3. Securing assembly (10) according to claim 1 or 2, the support (12) comprising upper (30) and lower (32) proximal bearing surface areas, the upper (30) and lower (32) proximal bearing surface areas resting against the edge of the opening of the body part (14).

4. Securing assembly (10) according to any one of the preceding claims, comprising a lower distal bearing surface area (33) which rests against the body part (14) at a distance allowing the upper proximal bearing surface area (30) to be pressed durably against the body part (14).

5. Securing assembly (10) according to any one of the preceding claims, wherein the upper proximal bearing surface area has an edge (18) adapted to rest on the body part, the edge (18) having a width of less than or equal to 12 mm.

6. Assembly according to any one of claims 1 to 5, wherein the distance between the lower proximal bearing surface area (32) and the lower distal bearing surface area (33) is less than or equal to 40 mm and preferably between 10 mm and 30 mm.

7. Assembly according to any one of claims 1 to 6, wherein the connecting elements are latching lugs.

8. Assembly according to claim 1 to 7, wherein the horizontal and vertical positioning of the base relative to the support is ensured by projections integrally produced with the base or with the support.

9. Body part provided with an assembly according to any one of claims 1 to 8, wherein the support is essentially in cantilever with respect to the bearing surface of the body against which the upper proximal bearing surface area is pressed.

10. Assembly according to one of claims 1 to 8, comprising a leg (37) adapted to maintain the support (12) at least partly.
